# FASCICULE DE BREVET EUROPEEN

(11) **EP 3 542 247 B1**
(45) Date de publication et mention de la délivrance du brevet: **16.03.2022**
(21) Numéro de dépôt: 17804259.4
(22) Date de dépôt: 17.11.2017
(51) Int. Cl.: G06F 3/01, G02B 27/01

(54) **ACCESSOIRE DE RÉALITÉ VIRTUELLE**
ZUBEHÖR FÜR VIRTUELLE REALITÄT
VIRTUAL REALITY ACCESSORY

(30) Priorité: 17.11.2016 FR 1661148
(43) Date de publication de la demande: 25.09.2019
(73) Titulaire: INRIA - Institut National de Recherche en Informatique et en Automatique, 78150 Le Chesnay (FR); Ardouin, Jérôme, 53240 St Jean sur Mayenne (FR)
(72) Inventeur: ARDOUIN, Jérôme, 53240 St Jean sur Mayenne (FR); LECUYER, Anatole, 35000 Rennes (FR)
(74) Mandataire: Cabinet Netter
(86) Numéro de dépôt international: PCT/FR2017/053158
(87) Numéro de publication internationale: WO 2018/091850

(56) Documents cités:
- JAN GUGENHEIMER ET AL: "GyroVR", USER INTERFACE SOFTWARE AND TECHNOLOGY, ACM, 2 PENN PLAZA, SUITE 701 NEW YORK NY 10121-0701 USA, 16 octobre 2016 (2016-10-16), pages 227-232, XP058299672, DOI: 10.1145/2984511.2984535 ISBN: 978-1-4503-4189-9 & Jan Gugenheimer: , 19 octobre 2016 (2016-10-19), Extrait de l'Internet: URL:http://dl.acm.org/ft_gateway.cfm?id=29 84535&ftid=1816879
- JIMMY CHIU ET AL: "Design of a Wearable Scissored-Pair Control Moment Gyroscope (SP-CMG) for Human Balance Assist", ASME 2014 INTERNATIONAL DESIGN ENGINEERING TECHNICAL CONFERENCES AND COMPUTERS AND INFORMATION IN ENGINEERING CONFERENCE; VOLUME 5A: 38TH MECHANISMS AND ROBOTICS CONFERENCE BUFFALO, NEW YORK, USA, AUGUST 17-20, 2014; CONFERENCE SPONSORS: DESIGN ENGIN, vol. 5A, 1 janvier 2014 (2014-01-01), pages 1-10, XP008175884, DOI: 10.1115/DETC2014-35539 ISBN: 978-0-7918-4636-0

## Description

L'invention concerne le domaine de la réalité virtuelle, et plus particulièrement les accessoires adaptés aux simulations de réalité virtuelle.

La réalité virtuelle est un domaine qui connaît un essor remarquable, et qui est sur le point de devenir un marché de masse. Cependant, de nombreux défis s'imposent, notamment en ce qui concerne le bien-être des utilisateurs qui utilisent les simulateurs de réalité virtuelle.

En effet, lorsqu'un utilisateur est immergé dans une simulation de réalité virtuelle, il est fréquent qu'un conflit se développe entre sa vue, qui perçoit le mouvement dans la simulation, et son système vestibulaire, qui perçoit une quasi-immobilité. Dans les cas les plus favorables, ce conflit est la cause d'une immersion moindre de l'utilisateur. Dans les cas les plus défavorables, ce conflit peut rendre l'utilisateur malade, ce phénomène étant connu comme « le mal des simulateurs ».

Jan Gugenheimer, dans "GyroVR: Simulating Virtual Reality using Head Worn Flywheels" publié dans "Proceedings of the 29th Annual Symposium on User Interface Software and Technology", en Octobre 2016, décrit un masque de réalité virtuelle qui contient des volants d'inertie. L'invention vient améliorer la situation. À cet effet, elle propose un accessoire de réalité virtuelle comprenant un casque qui comprend au moins quatre actionneurs gyroscopiques montés sur ledit casque de sorte à exercer un couple avec une direction respective sur le casque et positionnés chacun à un coin du masque de manière sensiblement symétrique deux à deux par rapport à deux axes de symétrie du casque, un contrôleur étant relié à chacun desdits actionneurs gyroscopiques et étant agencé pour les commander ensemble en fonction de lois de commande respectives afin de produire un retour haptique lié au mouvement d'un utilisateur dans une simulation de réalité virtuelle, le casque ayant une forme de masque.

Cet accessoire est particulièrement avantageux car il est portable et permet d'améliorer l'immersion de l'utilisateur sans entraver son mouvement, sans nécessiter d'ancrage dans l'environnement physique du lieu de la simulation.

Selon diverses variantes, l'accessoire selon l'invention peut présenter une ou plusieurs de caractéristiques suivantes :
- le casque comprend une portion d'attache pour un dispositif de simulation de réalité virtuelle,
- le casque reçoit un dispositif de simulation de réalité virtuelle,

D'autres caractéristiques et avantages de l'invention apparaîtront mieux à la lecture de la description qui suit, tirée d'exemples donnés à titre illustratif et non limitatif, tirés des dessins sur lesquels :
- la Figure 1 représente une vue en perspective d'un utilisateur portant un accessoire de réalité virtuelle selon un premier mode de réalisation de l'invention,
- les Figures 2 à 4 représentent respectivement une vue de face, de côté et de dessus de la Figure 1,
- la Figure 5 représente une vue en perspective d'un utilisateur portant un accessoire de réalité virtuelle selon un deuxième mode de réalisation de l'invention,
- les Figures 6 à 8 représentent respectivement une vue de face, de côté et de dessus de la Figure 5, et
- les Figures 9 à 11 représentent diverses vues d'un actionneur gyroscopique pouvant être utilisé dans l'un des accessoires des Figures 1 à 8.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

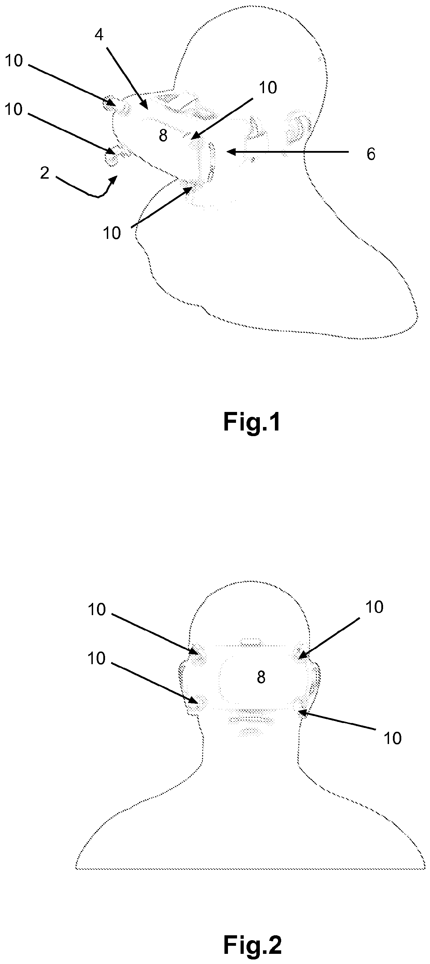

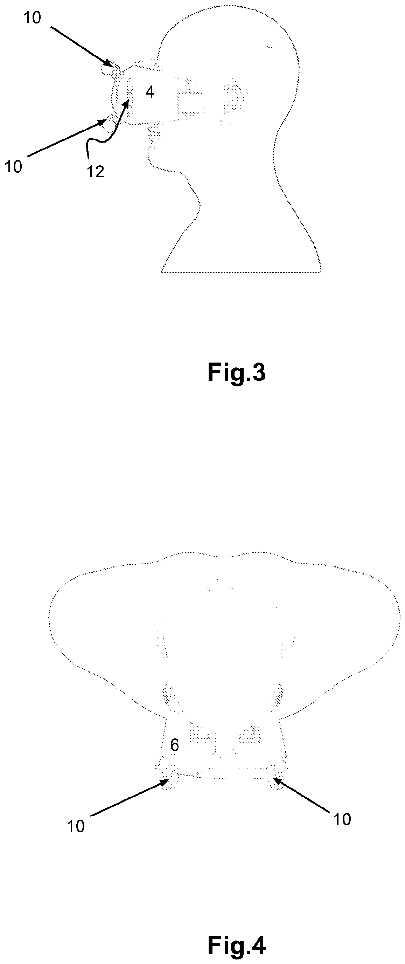

La Figure 1 représente une vue en perspective d'un utilisateur portant un accessoire de réalité virtuelle 2 selon un premier mode de réalisation de l'invention. La description qui suit de la Figure 1 est également faite en référence aux Figures 2 à 4.

L'accessoire de réalité virtuelle 2 comprend un casque 4 en forme de masque, semblable aux casques de réalité virtuelle du commerce comme l'Occulus Rift (marque déposée) ou le HTC Vive (marque déposée), c'est-à-dire qu'il couvre essentiellement la région oculaire du crâne de l'utilisateur, sans recouvrir entièrement le reste du crâne.

Dans ce mode de réalisation, le casque 4 présente une portion d'attache 6 qui reçoit un dispositif de simulation de réalité virtuelle 8. La portion d'attache 6 permet une exposition directe des yeux de l'utilisateur à l'écran du dispositif de simulation de réalité virtuelle 8, de manière préférée de sorte que l'utilisateur ne perçoive que les images de cet écran, et aucune autre source de lumière. L'accessoire de réalité virtuelle 2 et le dispositif de simulation de réalité virtuelle 8 forment alors un visiocasque. Le dispositif de simulation de réalité virtuelle 8 pourra donc comprendre un ou plusieurs écrans pour afficher la simulation, ainsi qu'optionnellement des moyens de calcul de simulation.

En variante, le casque 4 peut être dépourvu de portion d'attache, et le dispositif de simulation de réalité virtuelle 8 présente des éléments d'attache propres permettant de placer ce dernier sur le crâne de l'utilisateur au niveau des yeux.

L'accessoire de réalité virtuelle 2 comprend également quatre actionneurs gyroscopiques 10. Chaque actionneur gyroscopique comprend une roue d'inertie, un moteur d'entraînement de la roue d'inertie muni d'une électronique de contrôle pour un asservissement à vitesse sensiblement constante, un moteur de précession d'axe orthogonal au moteur d'entraînement muni de son électronique de contrôle permettant la mise en rotation de l'ensemble, et un cardan reliant le moteur d'entraînement au moteur de précession.

Dans l'exemple décrit ici, la roue d'inertie peut être réalisée sous la forme d'une masse de forme cylindrique ou torique, et le moteur d'entraînement est capable d'amener la roue d'inertie à des vitesses de rotation de l'ordre de 2000 à 40000 tr/min.

Les actionneurs gyroscopiques 10 sont dans l'exemple décrit ici répartis aux quatre coins du casque 4. Ainsi, chaque actionneur gyroscopique 10 peut être commandé selon une loi de commande qui lui est propre et qui permet d'exercer un couple sur le casque 4 à l'endroit auquel il est positionné. Pour cela, cette loi établit comment le moteur de précession doit être actionné en fonction du couple désiré et de l'angle de précession de chaque actionneur.

L'accessoire de réalité virtuelle 2 comprend également un contrôleur 12 qui a pour fonction de commander les actionneurs gyroscopiques 10 ensemble, en fonction de leur loi de commande respective, afin de fournir à l'utilisateur un retour haptique au moyen des couples qu'ils génèrent. Dans l'exemple décrit ici, le contrôleur 12 est intégré au casque 4. Les actionneurs gyroscopiques 10 et le contrôleur 12 sont alimentés électriquement au moyen de batteries non représentées. Tout type de batterie pourra être utilisé, incorporé au casque 4 ou déporté. Le contrôleur 12 pourra également être déporté du casque 4. En variante, l'alimentation électrique peut être externe, avec ou sans fil.

Dans l'exemple décrit ici, le contrôleur 12 reçoit des données d'accélération du dispositif de simulation de réalité virtuelle 8, et il convertit ces données en commande pour chacun des actionneurs gyroscopiques 10. En variante, le contrôleur 12 peut être simplifié de sorte que tous les calculs de commande des actionneurs 10 sont réalisés par le dispositif de simulation de réalité virtuelle 8, et le contrôleur 12 a pour fonction la commande synchronisée des actionneurs gyroscopiques 10. Le contrôleur 12 peut être relié au dispositif de simulation de réalité virtuelle 8 par tout moyen approprié, qu'il soit filaire, sans fil, par un protocole propriétaire ou non, etc.

La Demanderesse a découvert que les actionneurs gyroscopiques présentent de nombreux atouts pour l'application au retour haptique dans le cadre des simulations de réalité virtuelles. En effet, ils ont la capacité de produire un couple de force continu et important, et, contrairement aux roues de réaction, ils présentent un rapport énergie amplitude disponible intéressant sans effet de saturation.

De plus, les actionneurs gyroscopiques permettent de générer des couples continus, sans interruption et sans restriction dans la direction et ne requièrent pas d'appui mécanique extérieur, ce qui rend l'accessoire de réalité virtuelle 2 particulièrement bien adapté aux simulations de réalité virtuelle.

À titre d'exemple, une accélération restituée visuellement par le dispositif de simulation de réalité virtuelle 8 pourra être reproduite par l'accessoire de réalité virtuelle 2 au moyen d'une force appliquée par le casque 4 sur le crâne de l'utilisateur et proportionnelle à cette accélération. En variante, la force appliquée n'est pas directement proportionnelle à l'accélération, mais est tirée de celle-ci et/ou de la vitesse.

En effet, lors d'une accélération en voiture, le corps est solidaire du support (siège), et, en réponse à une accélération du véhicule, il accélère, le crâne subissant alors une force d'inertie, et en réponse, un couple ayant tendance à mettre le crâne en rotation vers l'arrière. Un phénomène semblable se produit lors des décélération/freinage ou lors des virages.

L'accessoire de réalité virtuelle 2 permet donc d'appliquer un couple de force sur le crâne de façon similaire à ce qu'il subit lorsque l'utilisateur est assis dans un véhicule.

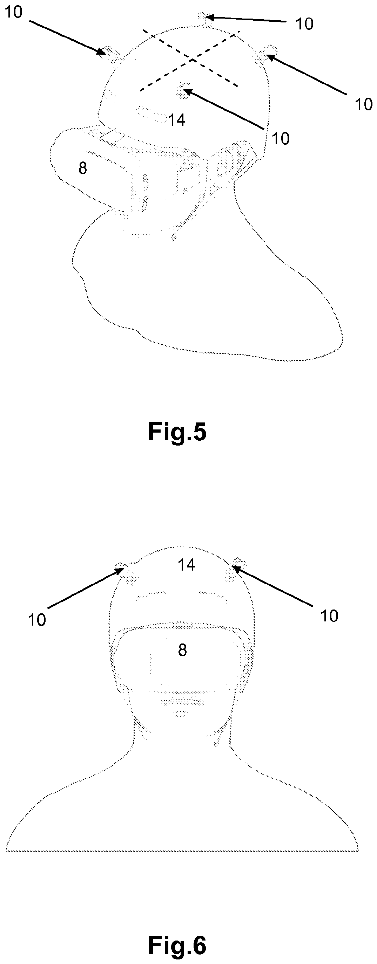

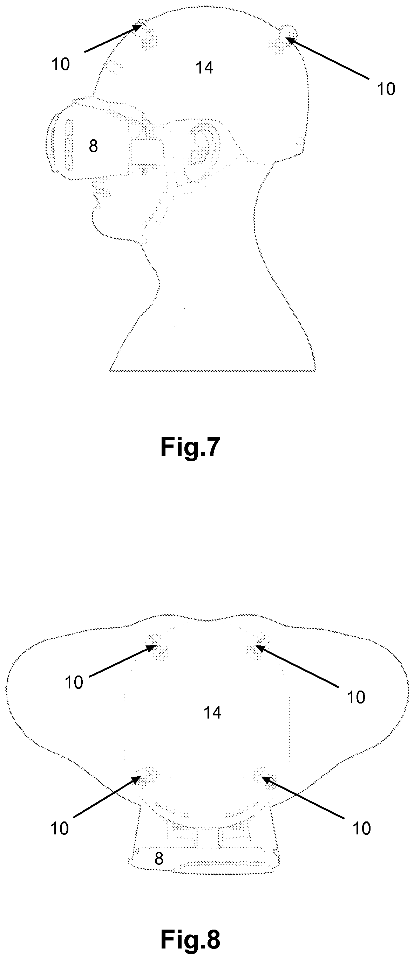

La Figure 5 représente une vue en perspective d'un utilisateur portant un accessoire de réalité virtuelle 2 selon un deuxième mode de réalisation de l'invention. La description qui suit de la Figure 5 est également faite en référence aux Figures 6 à 8.

Ce deuxième mode de réalisation présente un certain nombre de caractéristiques communes avec le premier mode de réalisation. Aussi, seules les différences seront décrites, les références numériques identiques désignant des caractéristiques similaires fonctionnellement.

La principale différence de ce mode de réalisation est que l'accessoire de réalité virtuelle 2 est prévu pour être mécaniquement distinct du dispositif de simulation de réalité virtuelle 8. Dans ce mode de réalisation, il n'y a pas de portion d'attache 6. Ainsi, le casque 4 comprend une coque 14 qui recouvre une partie significative, voire la quasi-totalité du crâne de l'utilisateur, à l'exception de la région oculaire.

Cela permet de rendre l'accessoire de réalité virtuelle 2 compatible avec un plus grand nombre de dispositifs de simulation de réalité virtuelle 8, et offre une plus grande liberté dans le positionnement des actionneurs gyroscopiques 10.

Le dispositif de simulation de réalité virtuelle 8 est dans l'exemple décrit ici un visiocasque, qui vient se poser sur le visage de l'utilisateur sans interférer avec le casque 4.

Dans ce mode de réalisation, les actionneurs gyroscopiques 10 sont placés à quatre « coins » du crâne, de manière sensiblement symétrique deux à deux par rapport à deux axes sensiblement orthogonaux de symétrie du casque 4. Ces axes sont représentés en pointillés sur la Figure 5. Ce placement des actionneurs gyroscopiques 10 permet un pilotage plus fin du retour haptique, ainsi qu'une attache plus ferme du casque 4 au crâne de l'utilisateur.

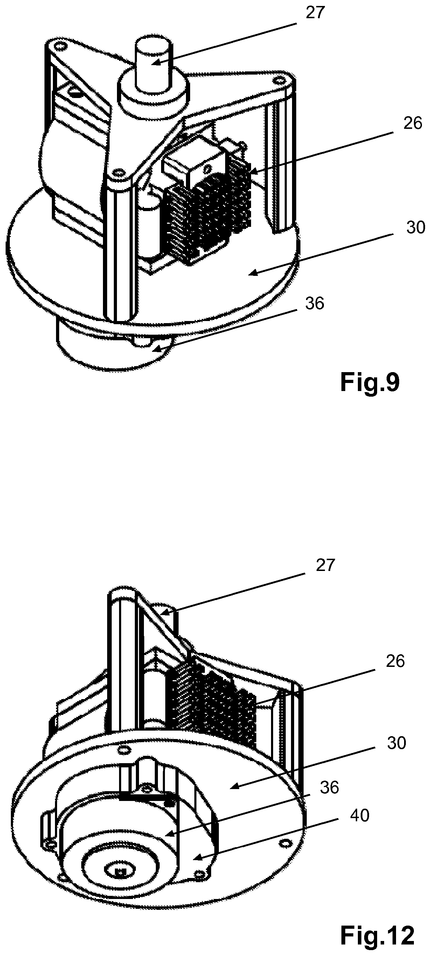

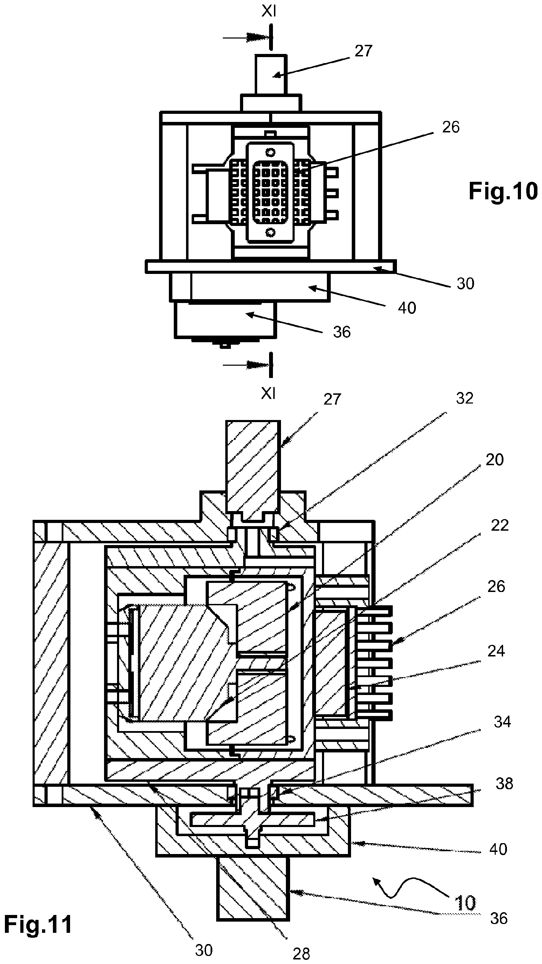

Les Figures 9 à 12 représentent diverses vues d'un actionneur gyroscopique 10 particulier. La Figure 9 représente une vue isométrique de l'actionneur gyroscopique 10, la Figure 10 représente une vue de côté selon la flèche X de la Figure 9, la Figure 11 représente une vue en coupe selon l'axe XI-XI de la Figure 10, et la Figure 12 représente une vue similaire à celle de la Figure 9 en vue de dessous.

L'actionneur gyroscopique 10 comprend un rotor 20 jouant le rôle de roue d'inertie. Le rotor 20 est entraîné par un moteur sans balai 22. Le moteur sans balai 22 est contrôlé par un contrôleur 24 mis en œuvre sous la forme d'une électronique embarquée dont les composants de puissance sont couplés thermiquement avec un radiateur 26 jouant un rôle de dissipateur thermique.

La puissance électrique et les signaux de commande sont acheminés contrôleur 24 via un collecteur tournant 27. L'ensemble moteur sans balai 22, contrôleur 24, et radiateur 26 est monté sur un cardan 28. Le cardan 28 est lié à un support 30 par des roulements 32 et 34 selon une liaison pivot.

L'actionneur gyroscopique comprend en outre un moteur de précession 36 de type pas à pas, et permet d'entraîner le cardan 28 au moyen d'un engrenage 38 solidaire de l'axe du cardan 28. Le mécanisme de l'engrenage 38 est protégé par un carter 40 servant également de support pour le moteur de précession 36.

Dans ce qui précède, il a été fait référence à des dispositifs de simulation de réalité virtuelle. Ces dispositifs peuvent réaliser la plupart des calculs nécessaires à la simulation ou être principalement des affichages reliés à des calculateurs séparés. En outre, la notion de réalité virtuelle au sens de l'invention inclut les simulations d'un mouvement d'un utilisateur, que ce soit dans une simulation, c'est-à-dire dans un monde virtuel (par exemple une voiture ou autre), ou que ce soit dans une commande déplacée (par exemple la commande à distance d'un robot opératoire). Ces dispositifs de simulation de réalité virtuelle peuvent également inclure des éléments supplémentaires à l'affichage, prévus pour reproduire l'environnement simulé, tels que des éléments tactiles, auditifs, visuels.

## Revendications

1. Accessoire de réalité virtuelle comprenant un casque (4), **caractérisé en ce qu'**il comprend au moins quatre actionneurs gyroscopiques (10) montés sur ledit casque (4) de sorte à exercer un couple avec une direction respective sur le casque (4) et positionnés chacun à un coin du masque de manière sensiblement symétrique deux à deux par rapport à deux axes de symétrie du casque (4), un contrôleur (12) étant relié à chacun desdits actionneurs gyroscopiques (10) et étant agencé pour les commander ensemble en fonction de lois de commande respectives afin de produire un retour haptique lié au mouvement d'un utilisateur dans une simulation de réalité virtuelle, le casque (4) ayant une forme de masque.

2. Accessoire selon la revendication 1, dans lequel le casque (4) comprend une portion d'attache (6) pour un dispositif de simulation de réalité virtuelle (8).

3. Accessoire selon la revendication 2, dans lequel le casque (4) reçoit un dispositif de simulation de réalité virtuelle (8).

## Patentansprüche

1. Zubehör für virtuelle Realität, ein Headset (4) umfassend, **dadurch gekennzeichnet, dass** es mindestens vier gyroskopische Stellglieder (10) umfasst, die an dem Headset (4) derart angebracht sind, dass sie ein Drehmoment mit einer jeweiligen Richtung auf das Headset (4) ausüben, und jeweils in einer Ecke der Maske, im Wesentlichen paarweise symmetrisch in Bezug auf zwei Symmetrieachsen des Headsets (4) positioniert, wobei ein Controller (12) mit jedem der gyroskopischen Stellglieder (10) verbunden ist und angeordnet ist, um sie gemeinsam in Abhängigkeit von jeweiligen Steuerungsregeln zu steuern, um eine haptische Rückmeldung in Verbindung mit der Bewegung eines Nutzers in einer Simulation einer virtuellen Realität zu erzeugen, wobei das Headset (4) eine Maskenform aufweist.

2. Zubehör nach Anspruch 1, wobei das Headset (4) einen Befestigungsabschnitt (6) für eine Vorrichtung zur Simulation einer virtuellen Realität (8) umfasst.

3. Zubehör nach Anspruch 2, wobei das Headset (4) eine Vorrichtung zur Simulation einer virtuellen Realität (8) empfängt.

## Claims

1. A virtual reality accessory comprising a headset (4), **characterized in that** it comprises at least four gyroscopic actuators (10) mounted on said headset (4) so as to exert a torque with a respective direction on the headset (4) and each positioned at a corner of the mask substantially symmetrically in pairs relative to two axes of symmetry of the headset (4), a controller (12) being linked to each of said gyroscopic actuators (10) and being arranged to control them together according to respective control laws in order to produce a haptic feedback related to the movement of a user in a virtual reality simulation, the headset (4) having the form of a mask.

2. The accessory according to claim 1, wherein the headset (4) comprises an attachment portion (6) for a virtual reality simulation device (8).

3. The accessory according to claim 2, wherein the headset (4) receives a virtual reality simulation device (8).
